# EUROPEAN PATENT APPLICATION

(11) **EP 1 659 510 A2**
(43) Date of publication of application: **24.05.2006**
(21) Application number: 05460031.7
(22) Date of filing: 15.11.2005
(51) Int. Cl.: G06F 17/50

(54) **A method and a device for automatic generation of the data of the thermal network of a technological product**

(30) Priority: 19.11.2004 PL 37127404
(71) Applicant: ABB Sp.zo.o., 04-713 Warszawa (PL)
(72) Inventor: Nowak, Tomasz, 30-389 Krakow (PL); Wyrwa, Bartlomiej, 34-130 Kalwaria zebrzydowska (PL); Kaltenborn, Uwe, 5405 Datwill (CH); Blaszczyk, Andreas, 80798 Munich (DE)
(74) Representative: Chochorowska-Winiarska, Krystyna

(57) **Abstract**

The subject of the invention is a method and a device for automatic generation of the data of the thermal network of a technological product based on an electronically created three-dimensional geometrical model of that product. The inventive method is realised by means of a device characterised in that in a computer system (1) the function block (5) of a utility program is adjusted for generating thermal diagrams of thermal networks and contains the first function module of an analyser (12) whose function is to analyse the geometrical shape of components and relationships between them defined by means of measures from the function block (4) of another utility program. The second function module of the analyser (13) is used to map data from the dedicated base of geometrical data (9) onto the heat diagrams of the thermal networks, taking into account the interrelations between the components by searching out in the database in the form of a heat diagrams library (10) the diagrams which characterise given components and by placing those information in the data storage block (7).

## Description

The subject of the invention is a method and a device for automatic generation of the data of the thermal network of a technological product based on an electronically created three-dimensional geometrical model of that product.

There are known methods and devices or systems for generating data for thermal networks created for electric and electronic products and systems. The thermal analysis of the thermal network of a product or system allows the evaluation of the quantity of heat generated and conducted from that product in the process of its use. This is of key importance in the process of product designing since the operating temperature of electric and electronic systems is one of the main factors affecting the reliability of this type of equipment. In theory, a good method for analysing thermal phenomena taking place in electric and electronic systems is to carry out tests using computerised Computational Fluid Dynamic (CFD) techniques. CFD techniques allow to determine the temperature of predetermined elements of the product as well as the temperature and movement of the medium (e.g. air or water) in which the tested system is located. From the physical point of view such calculations require solving a system of nonlinear equations representing the principles of conservation of energy, mass and momentum. However, when designing electric and electronic systems it is more convenient to use analogies between thermal and electric systems in the calculations, for example heat flow can be compared with passage of current, and electric potential with temperature.

One of known calculation methods based on the heat-electricity analogy is the Thermal Network (TN) technique. This method, due to its considerable computational speed, is applicable in designing electronic and semiconductor equipment systems, for example computer motherboards, electronic controllers etc. A classic application of the TN technique consists in making thermal calculations based on electric diagrams which are generated and used for electric analyses. Thus thermal and electrical analysis is carried out using one electric diagram for a given product or system.

An example of the method and system for generating data for thermal networks used when analysing structures comprising many electronic elements is known from patent application USA No. 2004/0073397. The method presented in that description consists in dividing the structure of the analysed product into a certain number of 4-node elements in the case of two-dimensional systems, or 8-node elements in the case of three-dimensional systems. For each element a so called A-node is established, which node is typically located in the central point of the element and has electric capacity and describes the temperature of the whole element. The A-nodes of various elements, interconnected with constraints which have electric resistance, form a thermal network. After the establishment of boundary-initial conditions for each node and after solving energy conservation equations, the thermal network analysis provides results in the form of the current temperature in the nodes and heat flow between them.

When a mechanical system is subjected to thermal analysis, it typically has no corresponding electrical diagram. That is why a thermal analysis of the system based on TN techniques causes considerable difficulties, because, for such system, first an electrical diagram must be made and this diagram must be transformed into a system consisting of thermal diagrams forming the thermal network of the system. Therefore there is a need for a simple solution which would make it possible to automatically generate the data of thermal networks for a given mechanical system, presented in the form of a three-dimensional geometrical model of that system.

Patent description US 6505326 makes known a method and system used to generate input data for thermal analysis of any mechanical structure, using a spatial model of the product prepared by means of the CAD application. The solution presented in the patent description makes use of a known method for dividing the analysed product geometry into a finite elements network, but what is characteristic, the solution employs also a new method which makes it possible to update the thermal elements network if the product geometry is modified. As the updating of the network takes place only in the area where the product geometry has been changed, and not in the whole, as was the case in earlier solutions, therefore the process of generating new input data for subsequent thermal analyses is quicker and easier for the user. The described solution does not apply to the generation of full data for thermal networks, but it applies only to the division of the geometrical model into elements.

The method for automatic generation of the data of the thermal network of a technological product consists in using a computer system to which an external spatial modelling utility program is supplied in the first function block designed for editing a geometrical model of a technological product, for possibly dividing that model into predefined, simpler geometrical components and for selecting them by the user. The essence of the inventive method is that the second utility program in the function block is supplied, which is designed for creating thermal network data and which in a data storage block contains a database in the form of a library of thermal diagrams defined for predefined geometrical components. Data concerning the geometry of individual components composing the geometrical model of the technological product are called from the first function block of the external utility program, and then, in the first function module of an analyser belonging to the second function block, used to analyse the shape of the geometrical components, on the basis of the called data the geometrical parameters of all individually called components are defined and the geometrical interrelations between the components are defined. That information is stored in a dedicated base of geometrical components in a data storage module. The stored information is sent to the second function module of an analyser of the second function block and that information is translated into the final thermal network by comparing the stored information about the components with the thermal network diagrams collected in the database in the form of thermal diagrams library and by selecting those thermal network diagrams from the database in the form of thermal networks library, which reflect the analysed geometrical components. Then the selected thermal networks are automatically recorded in a database of transformed thermal networks in the data storage module as a system comprising the thermal network of the whole geometrical model in which the interrelations between the components are taken into consideration, and in which additional data entered to that base through any user interface from an I/O device are recorded. A result file is generated from the recorded data in a result data generating module.

Preferably, the result file has the form of a text file and constitutes an equivalent of input file describing an electric network of the technological product.

Preferably the syntax of the result file is adjusted to a specific calculation application used in the heat analysis.

Preferably the external utility program in the first function block, designed for constructing a geometrical model of a technological product, for dividing that model into specific geometrical components and for selecting them by the user is a utility program for spatial modelling CAD (Computer Aided Design).

Preferably the second utility program in the second function block, generating the data of the thermal networks, communicates directly with a CAD spatial modelling system, preferably through an application programming interface, API.

The inventive device using a computer system comprising a processor, a memory with embedded function blocks of utility programs able to communicate with each other by means of an application programming interface (API), an I/O device and a data storage block is characterised in that a function block of one of the utility programs is designed for creating heat diagrams of thermal networks and contains the first and the second function modules of an analyser, as well as a result data-generating module. The function of the first function module of the analyser is to analyse the geometrical shape of the components and the interrelations between them, defined by means of the measures from a function block of another utility program. The output of the first function module of the analyser is connected with a dedicated base of geometrical data located in a data storage block. The function of the second function module of the analyser is to map data from the dedicated base of geometrical data onto the heat diagrams of the thermal networks, taking into account the interrelations between the components. The mapping is done by searching out diagrams which characterise given components in a database in the form of a heat diagrams library and by placing those information in the data storage block. The output of the second function module of the analyser is connected with a transformed components database located in the data storage block, which in turn is connected with the results-generating module connected to the I/O device.

Preferably the computer system is a part of the client-server architecture.

The inventive method and device has many advantages in relation to known solutions, because in all solutions known so far the generation of input data for thermal analyses involves the division of the analysed product geometry into a dense network of elements and nodes. The number of elements and nodes, i.e. the size of the network largely depends on the size of the geometrical model itself - for instance, the larger is the product diameter the more thermal elements are necessary to model it. In the inventive solution, the number of generated input data for thermal calculations, i.e. the size of the network, practically does not depend on the geometrical size of the product. Cylinders of a very small or very large diameter are described by the same, small number of thermal data. An additional advantage is that if the analysed geometry of the technological product changes, for instance the product diameter, there is no need to generate new input data, as is the case with the old solutions, but it will be sufficient to change one parameter in the set of data describing the thermal network of the product. This makes the thermal calculations execution process much easier and shorter.

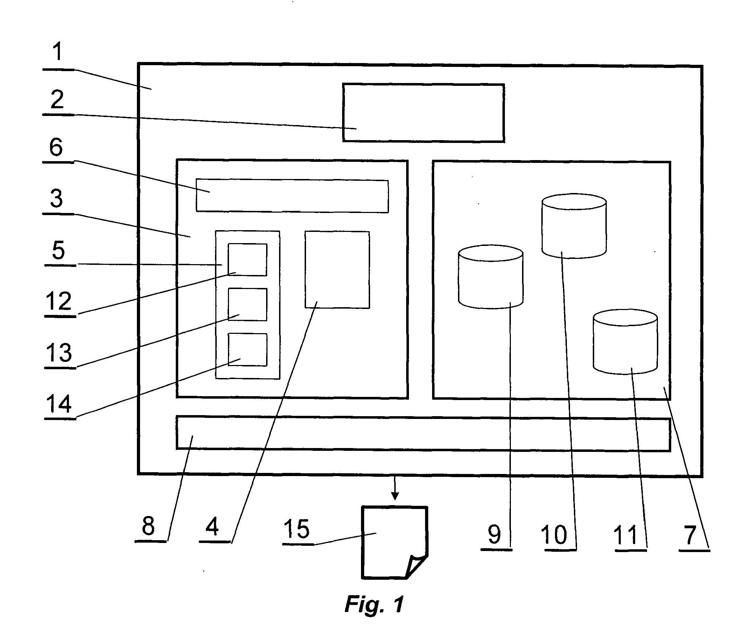

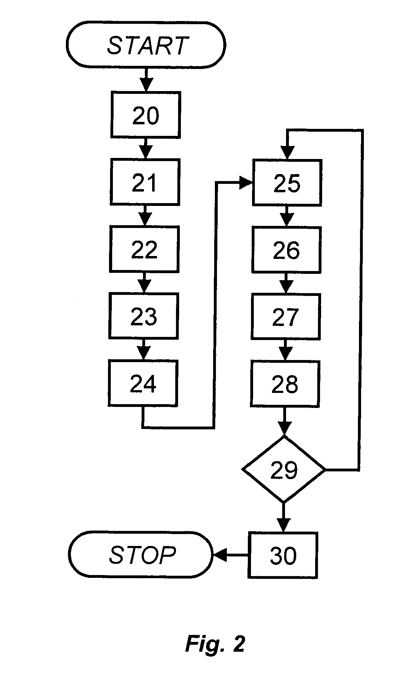

The subject of the invention is presented in an embodiment in the drawing where fig. 1 shows the device for automatic generation of data concerning the thermal network of a technological product, fig. 2 - the network of actions for implementing the method for automatically generating data concerning the thermal network of a technological product, and fig. 3a, 3b. 3c - examples of practical applications of the invention.

A computer system 1 contains a processor 2 in the form of a Central Processing Unit (CPU), a primary memory 3 holding the block of the first external utility program 4 and the block of the second utility program 5, which communicate with each other via an Application Programming Interface (API) 6, a data storage block 7 and an I/O device 8. The computer system 1 is a part of the client-server architecture, which means that the user can communicate with the computer device that functions as a server through the Internet/Intranet network.

In the primary memory 3 there are implemented two utility programs of which the first presented in block 4 is used to edit the geometrical model of the technological product. By means of appropriate commands supplied to the block 4 via the user interface from the I/O device 8, the division of the geometrical model into predefined geometrical components and the selection of components intended for further transformation can be done in this block. The second utility program is presented in the block 5 and it is used for generating thermal diagrams of thermal networks. Both utilities communicate with each other through the API interface 6*,* and they can also communicate with the data storage block 7, containing a dedicated geometrical data base 9, a data base in the form of a library of thermal networks 10 and a data base of transferred components 11. The block 5 is connected with the geometrical data base 9 and the data bases 10 and 11 in such way that that the first function module of an analyser 12, whose function is to analyse the shape of the components, is connected with the data base 9 from the block 7. The second function module of the analyser 13 from the block 5 is used to translate data from the data base 9 into the thermal diagrams of the thermal networks by selecting a corresponding thermal diagram from the data base 10 containing the library of thermal diagrams defined for predefined geometrical components, located in the data storage block 7. The module 13 is connected with the data base of transformed components 11, located in the data storage block 7, in which data obtained as a result of translating information about the geometrical components into the thermal diagrams are accumulated. The data base of transformed components 11 is connected with a result data generating module 14 located in the block 5, and this module is connected with the I/O device 8. A typical I/O device contains a display, a keyboard, indicators, network connections, a user's interface, drives for reading disks, which is not shown in the drawing.

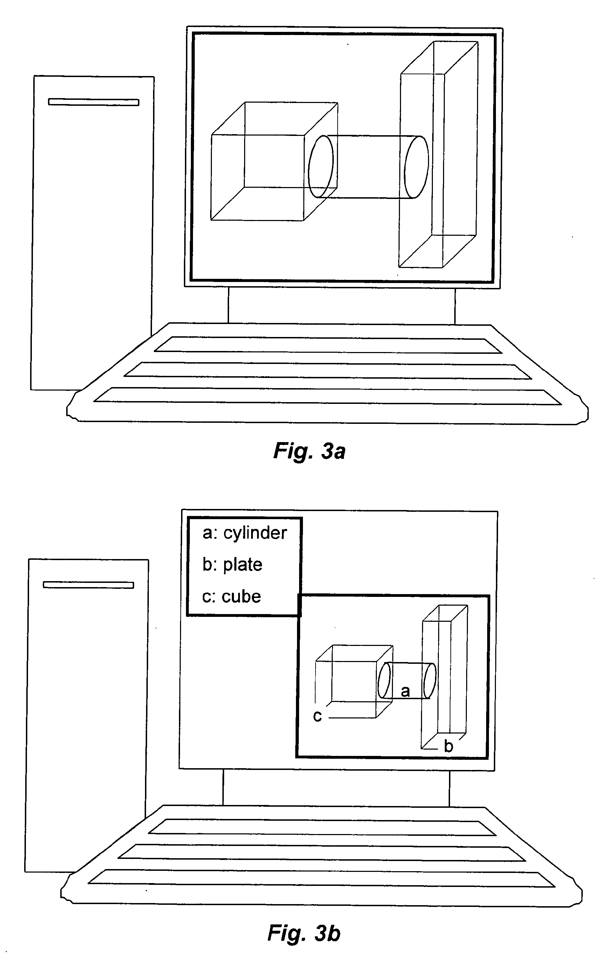

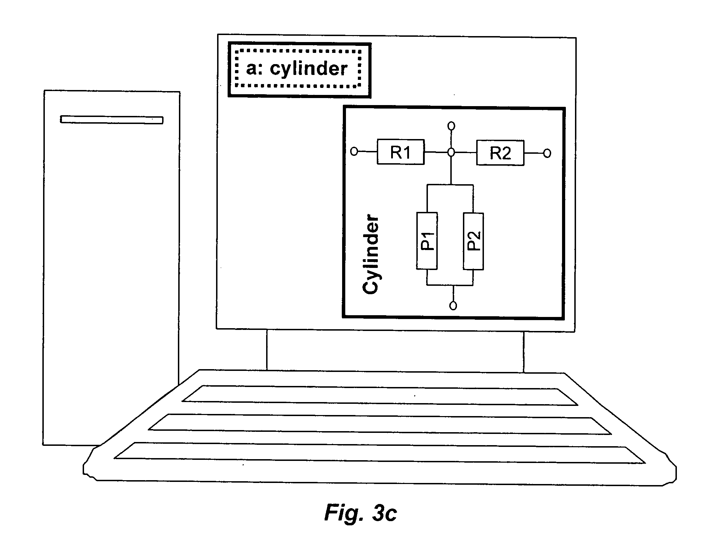

The method according to the embodiment example is realised by means of the following operations:
□ in operation 20 - an external utility program, which is CAD, is delivered to the computer system 1, and by means of this utility a geometrical model of the analysed technological product is generated in the function block 4; this model is shown on the computer display (fig. 3a),
□ in operation 21 - the geometrical model is divided into components which are individual representations of geometrical solids, for example, in fig. 3a each component has one corresponding part of the model which represents a geometrical solid; part a: cylinder, part b: plate, part c: cube, etc., and together with the geometrical model a list of components is shown on the display (fig. 3b),
□ in operation 22 - the user, through the I/O device 8, selects from the group of components only those which are essential to the geometrical model of the technological product, disregarding components that are of little use for further analysis.
□ in operation 23 -the second computer program is fed to the computer system 1, by means of which program the process of generating data of the thermal networks of the technological product starts in the function block 5, and the function blocks 5 and 4 communicate with each other by means of the programming interface (API) 6,
□ in operation 24 - in the function block 5, by means of the API 6, data concerning the shape of the components selected in operation 22 are called from the function block 4,
□ in operation 25 - in the first function module of the analyser 12 of the function block 5 the geometrical parameters of the components are analysed, for instance, the component volume, gross area etc., and also, in order to determine the way of heat exchange, geometrical relationships between the components are identified in such way that if the surfaces of the given components adjoin, it is assumed that a heat conduction process takes place between these components - there is the parameter of electric resistance R (in fig. 3c resistance is marked as R1, R2), whereas if one component is contained inside another, then it is assumed that there is a radiation and heat convection process between these components - additionally there occur capacitance parameters P1 and P2.
□ in operation 26 - the data obtained when analysing the geometry of the components and the relationships between them are recorded in the dedicated base of geometrical components 9, in the data storage module 7,
□ in operation 27 - transfer of data is made from the dedicated base of geometrical components 9 to the second module of the analyser 13, of the function block 5, in which these data are mapped onto the thermal diagrams of thermal networks by searching out in the database in the form of a heat diagrams library (10) the diagram which corresponds to the given component,
□ in operation 28 - the data of the thermal diagram describing the given component and additional data which are entered through the user interface from the I/O device 8 are recorded in the data base of transformed thermal networks 11, in the data storage module 7 and they are shown on the display in a predefined form, for instance in fig. 3c the cylinder from fig. 3a is shown in the form of a thermal diagram,
□ in operation 29 - operations from 25 to 28 are repeated in a loop until all geometrical components selected by the user have been analysed.
□ in operation 30 - in the results generating module 14, the data of the thermal network of all components of the geometrical model are called from the data base of the transformed thermal networks 11, and then, on their basis, the result file 15 is generated as a text file showing the diagram of the whole thermal network, whose syntax is adjusted to the calculation program which is then used.

### Key to the drawing

- 1.: computer system
- 2.: processor
- 3.: computer primary memory
- 4.: the first function block of the utility program
- 5.: the second function block of the utility program
- 6.: application programming interface, API
- 7.: data storage block
- 8.: I/O device
- 9.: dedicated base of geometrical data
- 10.: database of the library of heat diagrams
- 11.: database of transformed components
- 12: the first function module of an analyser
- 13: the second function module of an analyser
- 14: result data generating module
- 15: result file

## Claims

1. A method of automatic generation of the data of the thermal network of a technological product, making use of a computer system to which an external utility program for spatial modelling in the first function block is fed, designed for editing a geometrical model of a technological product, for possibly dividing that model into predefined, simpler geometrical components and for selecting them by the user, **characterised in that** the second utility program in the function block (5), which is designed for creating thermal network data and which in a data storage block (7) contains a database in the form of a library of thermal diagrams (10), defined for predefined geometrical components, data concerning the geometry of individual components comprising the geometrical model of the technological product are called from the first function block (4) of the external utility program, and then, in the first function module of an analyser (12) of the second function block (5), used to analyse the shape of the geometrical components, on the basis of the called data the geometrical parameters of all individually called components are defined and the geometrical interrelations between the components are defined, and that information is stored in a dedicated base of geometrical components (9) in the data storage module (7), whereupon the stored information is sent to the second function module of an analyser (13) of the second function block (5) and that information is translated into the final thermal network by comparing the stored information about the components with the thermal network diagrams collected in the database in the form of thermal diagrams library (10) and by selecting those thermal network diagrams from the data base in the form of the thermal networks library (10), which reflect the analysed geometrical components, whereupon the selected thermal networks are automatically recorded in a database of transformed thermal networks (11) in the data storage module (7) as a system comprising the thermal network of the whole geometrical model in which the interrelations between the components are taken into consideration, and in which additional data entered to that base through any user interface from an I/O device (8) are recorded, and then a result file (15) is generated from the recorded data in the result data generating module (14).

2. A method according to claim 1 **characterised in that** the result file (15) has the form of a text file and constitutes an equivalent of input file describing an electric network of the technological product.

3. A method according to claim 2 **characterised in that** the syntax of the result file (15) is adjusted to a specific calculation application used in the heat analysis.

4. A method according to claim 1 **characterised in that** the external utility program in the first function block (4), designed for constructing a geometrical model of a technological product, for dividing that model into specific geometrical components and for selecting them by the user is a utility program for spatial modelling CAD (Computer Aided Design).

5. A method according to claim 1 **characterised in that** the second utility program in the second function block (5), generating the data of the thermal networks, communicates directly with a CAD spatial modelling system, preferably through an application programming interface, API (6).

6. A device for automatically generating data of the thermal network of a technological product, using a computer system comprising a processor, a memory with embedded function blocks of utility programs able to communicate with each other by means of an application programming interface (API), an I/O device and a data storage block, **characterised in that** a function block (5) of one of the utility programs is designed for creating heat diagrams of thermal networks and contains the first and the second function modules of an analyser (12 and 13), as well as a result data-generating module (14), where the function of the first function module of the analyser (12) is to analyse the geometrical shape of the components and the interrelations between them, defined by means of the measures from a function block (4) of another utility program, and its output is connected with a dedicated base of geometrical data (9) located in a data storage block (7), while the function of the second function module of the analyser (13) is to map data from the dedicated base of geometrical data (9) onto the heat diagrams of the thermal networks, taking into account the interrelations between the components by searching out in the database in the form of a heat diagrams library (10) the diagrams which characterise given components and by placing those information in the data storage block (7), and its output is connected with a transformed components database (11) located in the data storage block (7) which in turn is connected with a results-generating module (14) connected to the I/O device (8).

7. A device according to claim 6 **characterised in that** the computer system (1) is a part of the client-server architecture.
